# EUROPÄISCHE PATENTANMELDUNG

(11) **EP 0 582 848 A2**
(43) Veröffentlichungstag der Anmeldung: **16.02.1994**
(21) Anmeldenummer: 93111217.1
(22) Anmeldetag: 13.07.1993
(51) Int. Cl.: H04L 29/14, H04L 12/26, H04L 1/00

(54) **Verfahren zur Fehlererkennung in digitalen Kommunikationssystemen**

(30) Priorität: 11.08.1992 DE 4226599
(71) Anmelder: SIEMENS AKTIENGESELLSCHAFT, D-80333 München (DE)
(72) Erfinder: Löbig, Norbert, Dr. Dipl.-Math., D-64291 Darmstadt (DE)

(57) **Zusammenfassung**

Bei der Durchschaltung von aus mehreren Informationsworten bestehenden Bitströmen in den Koppelfeldern digitaler Kommunikationssysteme treten Bitverfälschungen in Form von Falschdurchschaltungen auf. Um diese Falschdurchschaltungen zu entdecken und zu eliminieren, werden Überprüfungen in Form einer Mitlaufüberwachung eingeführt. So kann durch ein gezieltes kanalweises Überprüfen der jeweiligen Informationsworte festgestellt werden, ob der Fehler auch über einen längeren Zeitraum vorhanden ist. Ist dies der Fall, kann die entsprechende Verbindung abgebrochen werden, und es können Fehlerbehandlungsmaßnahmen eingeleitet werden.

## Beschreibung

Die zur Datenübertragung verwendeten analogen und digitalen Übertragungsverfahren auf Leitungen und Kabeln sind störenden Einflüssen, z.B. elektromagnetischen Feldern, ausgesetzt, die die zu übertragenden Informationen verändern, indem z.B. ein oder mehrere Bits während der Übertragung 'umgedreht' werden. Da insbesondere internationale Weitverkehrs-Verbindungen gegenüber Bitfehlern anfällig sind, haben internationale Normierungsgremien - wie z.B. CCITT - Minimalvorgaben für Bitfehlerraten festgelegt. Optische Übertragungsstrecken sind äußeren Einflüssen erheblich weniger unterworfen, so daß die Übertragungssicherheit bei der Verwendung optischer Übertragungsstrecken sehr hoch ist.

Generell setzt sich jede Übertragungsstrecke aus insgesamt zwei Anteilen zusammen:
- Ein Anteil betrifft die Übertragung der Informationen über eine physikalische Strecke zwischen zwei Knotenpunkten. Diese Strecken werden zunehmend durch optische Nachrichtenkabel realisiert.
- Ein weiterer Anteil betrifft die Durchschaltung der Informationen in den jeweiligen Knoten, in denen Kommunikationssysteme installiert sind.

Durch die Verwendung optischer Übertragungssysteme ist der potentielle Störeinfluß beim übertragungstechnischen Anteil entscheidend verringert worden; während der Durchschaltevorgänge in den Koppelfeldern der Kommunikationssysteme treten demgegenüber häufig Bitfehler auf.

Aufgrund ihrer zentralen Bedeutung für die Kommunikationssysteme sind die Koppelfelder in der Regel gedoppelt oder gar dreifach ausgeführt. Dies ermöglicht es, bei Fehlfunktion einer Koppelfeldebene die Informationen über eine andere Koppelfeldebene durchzuschalten. Zum einen kann dies derart erfolgen, daß sich eine Koppelfeldebene im Ruhezustand befindet, während die andere Koppelfeldebene das aktive Durchschalten der Informationen durchführt. Zum anderen können aber auch beide Koppelfeldebenen aktiv die entsprechenden Informationen durchschalten.

Problematisch sind jedoch z.B. durch Alterung einzelner Bauteile hervorgerufene Bitverfälschungen während der Durchschaltung eines Bitstroms. Solche Fehler können nur schwer analysiert und eliminiert werden.

Fehlererkennungsverfahren zur Erkennung und Korrektur von Bitfehlern in Koppelfeldern werden z. B. in Form einer Mitlaufüberwachung realisiert. In der deutschen Patentanmeldung P 41 28 412.7 ist ein solches Verfahren vorgeschlagen. Dort werden vor dem eigentlichen Durchschaltevorgang im Koppelfeld die die Information prägenden Informationsworte dupliziert und jedem Informationswort eine zusätzliche Prüfinformation, wie z.B. ein Paritybit, zugefügt, wobei ein Informationswort in der Regel aus acht Bit besteht. Die um ihre Prüfinformation ergänzten Informationsworte eines Kanals werden hierbei zwischen Schnittstellenelementen und Koppelfeldebenen im Zeitmultiplexverfahren übertragen. Generell versteht man unter einem Paritybit die binäre Quersumme über die einzelnen Bits eines Informationswortes. Vorzugsweise wird auch ein ungerades Paritybit zugefügt; darunter wird die invertierte binäre Quersumme eines Informationswortes verstanden. Die duplizierten Informationsworte werden über je eine Koppelfeldebene geleitet und nach dem Durchschaltevorgang wieder zusammengeführt. Anschließend wird erneut eine binäre Quersumme des durchgeschalteten Informationswortes ermittelt und mit dem mitübertragenen Paritybit verglichen. Weichen das mitübertragene und neu ermittelte Paritybit voneinander ab, so liegt ein Übertragungsfehler vor. Weiterhin werden nach dem Durchschaltevorgang die beiden einander zugeordneten Informationsworte bitweise miteinander verglichen. Der bitweise Vergleich in Verbindung mit einer Bewertung des mitübertragenen Paritybits erlauben in den meisten Fällen eine eindeutige Aussage darüber, welches Informationswort korrekt durchgeschaltet wurde. Wird ein Übertragungsfehler ermittelt, so wird er über eine statistische Funktion in einem entsprechenden Tabellenspeicher festgehalten. Somit lassen sich über bestimmte Zeiträume hinweg Aussagen über den Zustand der entsprechenden Koppelfeldebene machen. Diese Aussagen sind rein statistischer Natur und werden insbesondere dann herangezogen, wenn der bitweise Vergleich in Verbindung mit der Bewertung des Paritybits keine eindeutigen Ergebnisse liefert. Ist dies der Fall, kann vorzugsweise jene Koppelfeldebene zur Durchschaltung der Bitströme verwendet werden, die in der Vergangenheit die geringste Bitfehlerrate aufgewiesen hat.

Problematisch bei diesem Verfahren ist jedoch, daß eine Falschdurchschaltung durch eine Koppelfeldebene beim bitweisen Vergleich eine permanente Verschiedenheit der jeweiligen Informationsworte liefert, obwohl aufgrund der mitübertragenen Paritybits in jeder Koppelfeldebene eine korrekte Übertragung festgestellt wird. Da bei dem vorgeschlagenen Verfahren in diesem Fall auf die statistischen Qualitätsdaten zurückgegriffen wurde, wird bei einer auftretenden permanenten Falschdurchschaltung der Tabellenspeicher im Sinne der Statistik verfälscht.

Der Erfindung liegt die Aufgabe zugrunde, Fehler, die auf einer permanenten Falschdurchschaltung durch das Koppelfeld beruhen, zu erkennen und ggf. ihre Auswirkungen zu minimieren.

Diese Aufgabe wird ausgehend vom Oberbegriff des Patentanspruchs 1 erfindungsgemäß durch dessen kennzeichnende Merkmale gelöst.

Vorteilhaft für die Erfindung ist, daß Falschdurchschaltungen in einer Koppelfeldebene sehr schnell und ohne großen Steuerungsaufwand erkannt werden können. Somit können also nicht nur einzelne Übertragungsfehler erkannt und behoben werden, sondern auch generell eine Falschverbindung zwischen zwei Teilnehmern. Weiterhin führen sporadisch auftretende Fehler nicht zur fälschlichen Erkennung einer fehlerhaften Durchschaltung. Im Falle des Erkennens einer fehlerhaften Durchschaltung durch eine Koppelfeldebene kann dann von einer zentralen Steuereinrichtung die jeweilige Verbindung abgebrochen und Prozeduren zur Fehlererkennung gestartet werden. Die die Zeitspanne zur Verifizierung des Fehlers definierende Timerprozedur ist abhängig von der jeweiligen Übertragungsgeschwindigkeit. Die Timerprozedur kann dabei - je nach der erforderlichen Zeitspanne - hard- oder softwaremäßig realisiert werden. Ferner werden die fehlerhaft durchgeschalteten Kanäle durch das Verfahren identifiziert, was zur Fehlerlokalisierung und -behandlung ausgenutzt werden kann und es wird eine mitlaufende Überwachung der korrekten Durchschaltung über die Gesamtdauer einer beliebigen Verbindung realisiert, also nicht nur eine Überwachung zum Zeitpunkt des Verbindungsaufbaus.

Bei asynchron eingestellten Koppelfeldern wird davon ausgegangen, daß nach Auswertung der Signalisierungsinformation beide Koppelfeldebenen zu unterschiedlichen Zeiten eingestellt werden. In diesem Fall muß eine weitere Schutzzeit dafür Sorge tragen, daß für die Zeit des Einstellvorganges etwaige Verschiedenheit der über die Koppelfeldebenen durchgeschalteten Informationsströme nicht zur fälschlichen Erkennung einer fehlerhaften Durchschaltung führt.

Das erfindungsgemäße Verfahren kann weiterhin auf die das Koppelfeld bildenden Koppelfeldkomponenten angewendet werden. Dies hat den Vorteil, daß bereits im Koppelfeld etwaig auftretende Fehler erkannt, genauer lokalisiert und beseitigt werden.

Die Erfindung wird anhand dreier Zeichnungen näher erläutert.

Es zeigen
- FIG 1: ein Kommunikationssystem mit den entsprechenden eingangsseitigen und ausgangsseitigen Schnittstellenelementen sowie einem gedoppelt ausgeführten Koppelfeld,
- FIG 2: ein Beispiel für die Erkennung einer Falschdurchschaltung im Falle eines asynchron eingestellten, gedoppelten Koppelfeldes, und
- FIG 3: ein aus mehreren Koppelfeldkomponenten bestehendes mehrstufiges Koppelfeld.

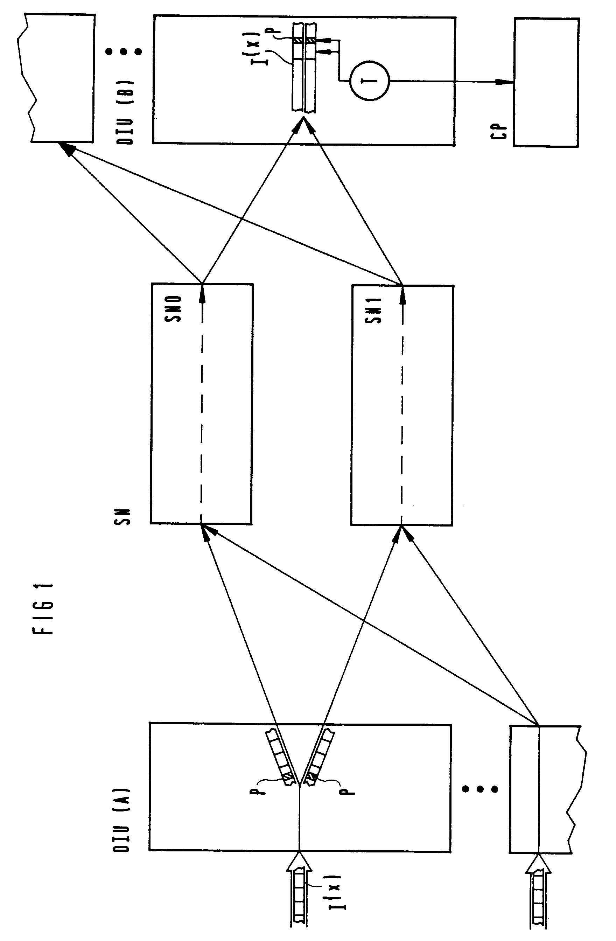

In FIG 1 ist eine Anordnung zur Durchführung des erfindungsgemäßen Verfahrens aufgezeigt. Eingangsseitige Schnittstellenelemente DIU(A) stellen die Schnittstelle zu einem Kommunikationsnetz dar. Hier werden die vom Kommunikationsnetz kommenden, aus mehreren Informationsworten I^{(O)}... I^{(N)} bestehenden Informationsströme in zwei identische Informationsströme aufgespalten. Außerdem wird jedem Informationswort I^{(x)} ein die binäre Quersumme bildendes ungerades Paritybit P zugefügt. Jeder Informationsstrom wird über eine gesonderte Koppelfeldebene SN0, SN1 geleitet. In ausgangsseitigen Schnittstellenelementen DIU(B) werden die durchgeschalteten Informationsströme wieder zusammengeführt. Hier werden dann die durchgeschalteten Informationsworte in einer ersten Bewertung hinsichtlich der Konsistenz ihres mitübertragenen, ungeraden Paritybits P überprüft. Ist ein Informationswort hinsichtlich seines mitübertragenen ungeraden Paritybits P konsistent, so besteht immer noch die Möglichkeit, daß 2, 4 etc. Bits während des Übertragungsvorganges verdreht wurden. Dies hat keinerlei Einfluß auf die Konsistenz des durchgeschalteten Informationswortes hinsichtlich seines ungeraden Paritybits P. In einer zweiten Bewertung wird kanalweise ein bitweiser Vergleich der jeweiligen Informationsworte I^{(x)} durchgeführt.

Tritt der Fall ein, daß ein durchgeschaltetes Informationswort zwar hinsichtlich seines mitübertragenen ungeraden Paritybits P konsistent ist, aber die zugeordneten Informationsworte verschieden hinsichtlich ihrer Bitpositionen sind, wird eine Timerprozedur T gestartet. Sie dient insbesondere dazu, die nachfolgenden, zu demselben Kanal gehörenden Informationsworte näher zu untersuchen. Während der durch die Timerprozedur T definierten Zeitspanne werden in diesem Kanal weiterhin die erste und zweite Bewertung durchgeführt. Tritt der Fall ein, daß eine Inkonsistenz eines Informationswortes hinsichtlich seines ungeraden Paritybits P ermittelt wird, so kann davon ausgegangen werden, daß es sich bei der Übertragung um einen sporadischen Fehler handelt. In diesem Fall wird die Timerprozedur T abgebrochen. Treten während der Zeitspanne weitere Diskrepanzen bei Konsistenz hinsichtlich des ungeraden Paritybits P in diesem Kanal auf, so muß davon ausgegangen werden, daß eine Falschdurchschaltung in einer der Koppelfeldebenen SN0, SN1 vorliegt. Um eine sichere Aussage darüber machen zu können, sollten die ab dem ersten aufgetretenen Fehler übertragenen nächsten K₁ Informationsworte zur Untersuchung herangezogen werden. Ist in diesen in beispielsweise K₂ (≦ K₁) Informationsworten eine Verschiedenheit der jeweiligen, über beide Koppelfeldebenen herangeführten Informationsworte ermittelt worden, so muß davon ausgegangen werden, daß ein Durchschaltefehler in einer der Koppelfeldebenen SN0, SN1 vorgelegen hat. In diesem Fall wird eine Meldung an die zentrale Steuereinrichtung CP gesendet. Diese bricht daraufhin die Verbindung ab und startet Prozeduren zur Fehlererkennung.

Die soeben beschriebene Vorgehensweise eignet sich für synchron eingestellte Koppelfelder SN. In der Praxis treten jedoch auch asynchron eingestellte Koppelfelder SN auf. Asynchron eingestellte Koppelfeldebenen liegen dann vor, wenn nicht garantiert werden kann, daß die mindestens gedoppelten Koppelfeldebenen zum absolut gleichen Zeitpunkt die Einstellung ihrer Koppelfeldebenen durchführen, so daß trotz des Einstellvorgangs nicht eine einzige Bitdiskrepanz zwischen den beteiligten Koppelfeldebenen festgestellt wird. Dies bedeutet, daß zwei asynchron eingestellte Koppelfeldebenen SN0, SN1 unter Umständen nicht exakt zeitgleich eingestellt werden. In diesem Fall muß selbstverständlich davon ausgegangen werden, daß ein bitweiser Vergleich während der Dauer des Einstellvorganges eine Verschiedenheit der jeweiligen Informationsworte ermittelt. Diese Verschiedenheit ist jedoch nicht im Sinne des erfindungsgemäßen Verfahrens. Daher wird eine für den Einstellvorgang charakteristische Schutzzeit eingestellt, innerhalb derer etwaige auftretende Diskrepanzen der Informationsströme nicht berücksichtigt werden. Ist diese Schutzzeit abgelaufen, werden die erste und zweite Bewertung wie weiter oben beschrieben durchgeführt.

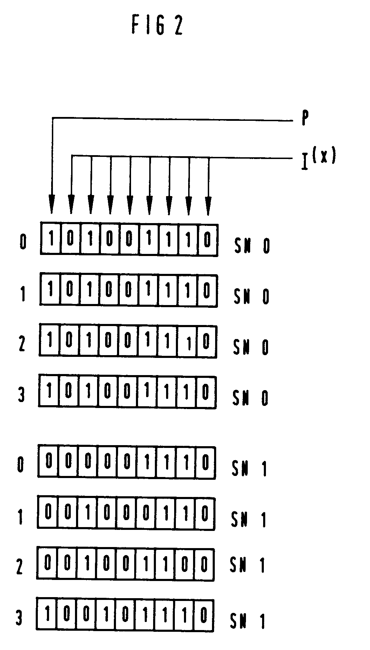

In FIG 2 sind die soeben beschriebenen Verhältnisse detaillierter aufgezeigt. Aus Gründen der Übersichtlichkeit wird davon ausgegangen, daß die Timerprozedur T nur vier Informationsworte abdeckt. Weiterhin wird davon ausgegangen, daß die Durchschaltegeschwindigkeit 64 Kbit/s beträgt. Wie aus FIG 2 ersichtlich, sind die über beide Koppelfeldebenen angelieferten Informationsworte 0, 1, 2 verschieden, hinsichtlich des mitübertragenen ungeraden Paritybits P jedoch konsistent. Da es sich bei dem Beispiel um asynchron eingestellte Koppelfelder handelt, wird zunächst eine Schutzzeit von 250 µs zur Überbrückung der asynchronen Einstellphase abgewartet. Weiterhin wird die Timerprozedur T mit einer Zeitspanne von 125 µs eingestellt. Somit wird ein permanenter Durchschaltefehler erst nach dem dritten Rahmen für eine 64 Kbit/s-Verbindung erkannt. In diesem Fall wird dann eine Meldung zum Steuerrechner CP durchgeführt. Dieser leitet dann Gegenmaßnahmen zur genaueren Fehlerlokalisierung ein.

Das erfindungsgemäße Verfahren kann weiterhin auf dreifach ausgeführte Koppelfelder SN angewendet werden. In diesem Fall werden die um ihre Prüfinformation ergänzten Informationsworte I^{(x)} vor dem Durchschaltevorgang tripliziert. Danach werden die jeweiligen Informationsworte I^{(x)} über die jeweilige Koppelfeldebene geleitet und anschließend in den ausgangsseitigen Schnittstellenelementen DIU(B) wieder zusammengeführt. Hier findet dann der bitweise Vergleich aller drei durchgeschalteten Informationsworte I^{(x)} sowie eine Bewertung des mitübertragenen Paritybits P statt. Im Falle einer Paritätskonsistenz in Verbindung mit einem erkannten Fehler im bitweisen Vergleich wird dann die Timerprozedur T gestartet. Wird nach Ablauf der Timerprozedur T eine hohe Fehlerquote festgestellt - also über zehn Rahmen etwa eine Fehlerquote von neun - so wird ein Vergleich aller drei Informationsworte I^{(x)} nach dem Prinzip eines Majoritätsentscheids durchgeführt. Das Prinzip des Majoritätsentscheids ist in K. Steinbuch: Taschenbuch der Nachrichtenverarbeitung (Springer-Verlag, 1962) beschrieben. Über das Prinzip des Majoritätsentscheids kann nach Bestimmung der Fehlerquoten zwischen jeweils zwei Koppelfeldebenen diejenige Koppelfeldebene als die mit der fehlerhaften Durchschaltung arbeitende erkannt werden, welche gegenüber den beiden weiteren eine unzulässige Fehlerquote aufweist. Demzufolge können nach erfolgter Meldung zum Steuerrechner CP in der jeweiligen, als defekt erkannten Koppelfeldebene Prozeduren zur Fehlerbehandlung eingeleitet werden.

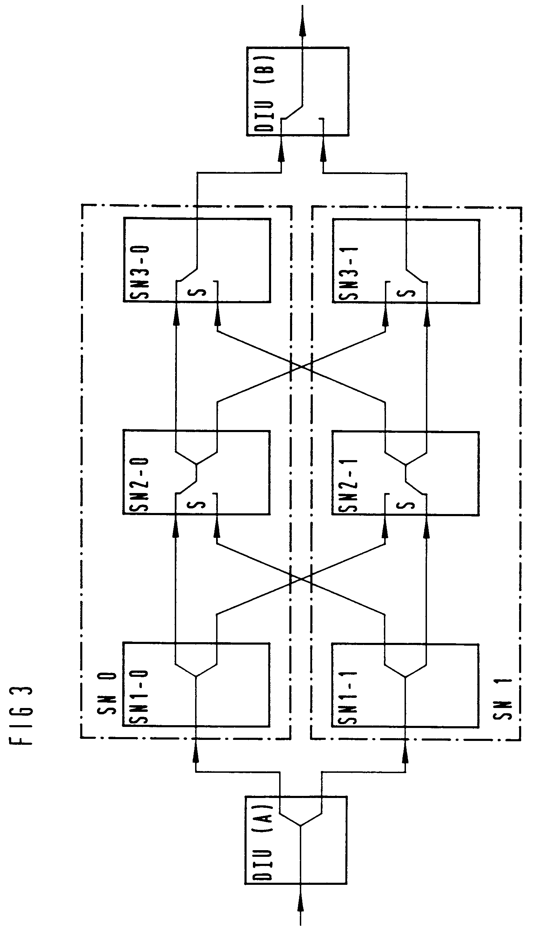

Das erfindungsgemäße Verfahren ist ebenso auf als Teilkomponenten im Sinne eines Koppelfeldes anzusehende Koppelfeldkomponenten SN_{(x-y)} anwendbar. Die jeweiligen Verhältnisse sind in FIG 3 aufgezeigt. Somit können bereits innerhalb des Koppelfeldes SN Überprüfungen hinsichtlich der Durchschaltefehler stattfinden.

Abschließend sei darauf hingewiesen, daß bei dem vorliegenden Ausführungsbeispiel zwar jedem der Informationsworte als Prüfinformation ein Paritybit beigefügt wird; anstelle eines solchen Paritybits kann jedoch jedem der Informationsworte auch eine anderweitige Prüfinformation beigefügt sein.

## Patentansprüche

1. Verfahren zur Fehlererkennung in digitalen Kommunikationssystemen (KS) mit jeweils einem aus mindestens zwei Koppelfeldebenen (SN0, SN1) bestehenden Koppelfeld (SN), das über eingangsseitige und ausgangsseitige Schnittstellenelemente (DIU(A), DIU(B)) in ein Kommunikationsnetz eingebunden ist, wobei
- in den eingangsseitigen Schnittstellenelementen (DIU(A)) über das Kommunikationsnetz ankommende, einen Informationsstrom bildende Informationsworte (I^{(O)}...I^{(N)}) jeweils mit einer Prüfinformation (P) versehen, entsprechend der Anzahl der Koppelfeldebenen vermehrfacht und über die mindestens zwei Koppelfeldebenen (SN0, SN1) übertragen werden und
- in den ausgangsseitigen Schnittstellenelementen (DIU(B)) die über die mindestens zwei Koppelfeldebenen durchgeschalteten Informationsworte zum einen einem bitweisen Vergleich und zum anderen einer Bewertung der mitübertragenen Prüfinformation (P) unterzogen werden,
**dadurch gekennzeichnet,**
daß im Falle einer Verschiedenheit der über die mindestens zwei Koppelfeldebenen durchgeschalteten Informationsworte sowie einer gleichzeitig ermittelten dauerhaften Konsistenz hinsichtlich ihrer jeweils mitgeführten Prüfinformation (P) für eine festgelegte Zeitspanne eine Fehlerüberwachung durchgeführt wird, innerhalb der die Verschiedenheit der aufeinanderfolgenden Informationsworte zur Ermittlung einer Fehlerquote festgehalten wird, und daß zumindest nach Ablauf der Zeitspanne im Falle einer bestimmten, zu hohen Fehlerquote eine Meldung an eine Steuereinrichtung (CP) abgegeben wird.

2. Verfahren nach Anspruch 1,
**dadurch gekennzeichnet,**
daß, falls während der Fehlerüberwachung eine Inkonsistenz bezüglich der Prüfinformation (P) eines Informationswortes bezüglich einer Koppelfeldebene ermittelt wird, die Fehlerüberwachung abgebrochen wird.

3. Verfahren nach Anspruch 1 oder 2,
**dadurch gekennzeichnet,**
daß auf eine Meldung hin von der Steuereinrichtung (CP) Maßnahmen zum Abbruch der Verbindung eingeleitet und Prozeduren zur Fehlererkennung gestartet werden.

4. Verfahren nach Anspruch 1, 2 oder 3,
**dadurch gekennzeichnet,**
daß als Prüfinformation (P) ein ungerades oder gerades Paritybit des jeweiligen Informationswortes benutzt wird.

5. Verfahren nach einem der vorhergehenden Ansprüche,
**dadurch gekennzeichnet,**
daß im Falle asynchron eingestellter Koppelfelder (SN) eine für die Dauer des Einstellungsvorgangs charakteristische Schutzzeit abgewartet wird, bevor die Fehlerüberwachung gestartet wird.

6. Verfahren nach einem der vorhergehenden Ansprüche,
**dadurch gekennzeichnet,**
daß bei Koppelfeldern mit drei Koppelfeldebenen nach Bestimmung der Fehlerquoten zwischen jeweils zwei Koppelfeldebenen nach dem Prinzip eines Majoritätsentscheids diejenige Koppelfeldebene als die mit der fehlerhaften Durchschaltung arbeitende erkannt wird, welche gegenüber den beiden weiteren eine unzulässige Fehlerquote aufweist.

7. Verfahren nach einem der vorhergehenden Ansprüche,
**dadurch gekennzeichnet,**
daß es in einem mehrstufigen mindestens gedoppelten Koppelfeld in mindestens einer der Koppelfeldstufen (SN_{(x-y)}) durchgeführt wird.
